Europäisches Patentamt

European Patent Office

Office européen des brevets

(11) Veröffentlichungsnummer: **0 268 072**
**A1**

# EUROPÄISCHE PATENTANMELDUNG

(21) Anmeldenummer: 87114976.1

(22) Anmeldetag: 13.10.87

(51) Int. Cl.4 **C09C 1/40** , C09C 1/24

(30) Priorität: 23.10.86 DE 3636076

(43) Veröffentlichungstag der Anmeldung:
25.05.88 Patentblatt 88/21

(84) Benannte Vertragsstaaten:
BE CH DE ES FR GB IT LI NL

(71) Anmelder: Merck Patent Gesellschaft mit
beschränkter Haftung
Frankfurter Strasse 250
D-6100 Darmstadt(DE)

(72) Erfinder: Franz, Klaus-Dieter, Dr.
Insterburgerstrasse 12
D-6233 Kelkheim(DE)
Erfinder: Esselborn, Reiner, Dr.
Küchlerstrasse 6
D-6100 Darmstadt(DE)
Erfinder: Emmert, Ralf, Dr.
419 John F. Kennedy Bvd.
Bayonne N.J. 07002(US)
Erfinder: Brückner, Hans-Dieter, Dr.
Masurenstrasse 6
D-6109 Mühltal 3(DE)

(54) Plättchenförmige Eisenoxidpigmente.

(57) Die Erfindung betrifft plättchenförmige Pigmente der Formel $Al_xFe_{2-x}O_{3-y}$, wobei x einen Wert von 0,02 bis 0,5 und y einen Wert von 0,3 bis 1,0 besitzt und die ggf. mit weiteren Oxiden beschichtet sind.

EP 0 268 072 A1

## Plättchenförmige Eisenoxidpigmente

Die Erfindung betrifft plättchenförmige Pigmente auf Basis von Eisenoxid, die Aluminiumoxid in fester Lösung enthalten.

Es besteht ein ständig wachsender Bedarf an Effektpigmenten, mit denen, z. B. in Lacken, Kunststoffen, Glas, Keramik oder auch in der Kosmetik, metallic-artige Effekte erzielt werden können. Neben natürlichen und synthetischen, plättchenförmigen Eisenoxiden, die durch hydrothermale Verfahren in unterschiedlichen Farben und Formen hergestellt werden können, sind auch aus der EP-PS 0068311 und der US-PS 4,373,963 plättchenförmige Eisenoxidpigmente bekannt, die Aluminiumoxid in fester Lösung, d. h. in das Hämatitkristallgitter eingebaut, enthalten. Diese Pigmente zeichnen sich durch einen sehr guten Glanz aus und können durch Variation der Verfahrensbedingungen des hydrothermalen Prozesses in verschiedenen Größen und Dicken und unterschiedlichen Rottönen hergestellt werden.

Aus der US-PS 4,373,963 ist es auch bekannt, solche Pigmente mit einer Außenbeschichtung von Titandioxid zu versehen und damit zusätzlich zu der Körperfarbe eine in Abhängigkeit von der Schichtdicke der opaken $TiO_2$-Schicht variierende Interferenzfarbe zu erzeugen.

Obwohl diese bekannten Pigmente für viele Anwendungen sehr gut geeignet sind, bestand immer noch ein Bedarf an Pigmenten, mit denen zum einen die zugängliche Farbpalette und zum anderen auch die Einsatzmöglichkeiten der Pigmente erweitert werden können.

Es wurde nun gefunden, daß die bekannten Aluminiumoxidhaltigen, plättchenförmigen Eisenoxide unter Beibehaltung der Form und des Glanzes zu im Sauerstoffgehalt verminderten neuen Pigmenten mit interessanten Farbeffekten reduziert werden können.

Gegenstand der Erfindung sind daher plättchenförmige Pigmente auf Basis von Eisenoxid, die Aluminiumoxid in fester Lösung enthalten, gekennzeichnet durch die Formel $Al_xFe_{2-x}O_{3-y}$, wobei x einen Wert von 0,02 bis 0,5 und y einen Wert von 0,3 bis 1,0 besitzt.

Gegenstand der Erfindung ist auch ein Verfahren zur Herstellung von plättchenförmigen Pigmenten der Formel $Al_xFe_{2-x}O_{3-y}$, wobei x einen Wert von 0,02 bis 0,5 und y einen Wert von 0,3 bis 1,0 besitzt, dadurch gekennzeichnet, daß man ein Pigment der Formel $Al_xFe_{2-x}O_3$, wobei x einen Wert von 0,02 bis 0,5 besitzt, in einer reduzierenden Atmosphäre auf eine Temperatur von etwa 200-800 °C erhitzt.

Gegenstand der Erfindung ist weiterhin die Verwendung dieser Pigmente zur Pigmentierung von Lacken, Farben, Kunststoffen, Fasern, Glas, Keramik oder Kosmetika.

Zur Herstellung der erfindungsgemäßen Pigmente werden die nach der EP-PS 0068311 oder US-PS 4,373,963 hergestellten Pigmente in einer reduzierenden Atmosphäre erhitzt. Als reduzierende Gase sind dabei beispielsweise Wasserstoff, Ammioniak, Methan und Kohlenmonoxid zu nennen, die allein oder im Gemisch untereinander oder auch im Gemisch mit inerten Gasen, wie z. B. Stickstoff, Argon oder Wasserdampf, eingesetzt werden können. Bevorzugt wird zur Reduktion ein Gemisch aus Wasserstoff und Stickstoff eingesetzt.

Neben der Art und Konzentration des reduzierenden Gases bestimmt insbesondere die Temperatur und die Dauer der Behandlung das Ausmaß der Reduktion. Gegebenenfalls kann die Reduktion des Eisens über die Magnetitstufe hinaus bis zur vollständigen Umwandlung in Eisen(II) erfolgen. Durch die dabei auftretende bekannte Disproportionierungsreaktion können auch Einlagerungen von metallischem Eisen auftreten.

Im Prinzip kann die Reduktion bei Temperaturen von 200-800 °C stattfinden, wobei Zeiten von etwa 10 bis etwa 100 Minuten zur Anwendung kommen. Bevorzugt wird die Reduktion jedoch bei einer Temperatur von etwa 300-500 °C durchgeführt, wobei Zeiten von etwa 20 bis etwa 40 Minuten angewendet werden. Je nach der Art des Ausgangspigments und dem Ausmaß der Reduktion erhält man dabei schwarz-gelbe, schwarz-rote bis zu rein schwarzen, hochglänzende Pigmente.

Die Reduktion kann sowohl kontinuierlich als auch diskontinuierlich durchgeführt werden in allen dazu geeigneten Apparaturen, die dem Fachmann geläufig sind. Vorzugsweise wird die Reduktion in einem mit einem reduzierenden Gas zu beschickenden Drehrohrofen durchgeführt.

Ein weiterer vorteilhafter Aspekt der vorliegenden Erfindung besteht darin, daß man die plättchenförmigen Pigmente vor oder nach der Reduktion mit weiteren Metalloxiden beschichten kann. Dabei können sowohl farblose als auch farbige Oxide aufgebracht werden und es können der Glanz, die Farbe, die Licht-und Wetterbeständigkeit und weitere Eigenschaften der Pigmente in breiter Form beeinflußt werden.

Als weitere Metalloxide, die in Mengen von etwa 1 bis etwa 60 Gew.%, insbesondere etwa 20 bis etwa 40 Gew.% , bezogen auf das Gesamtgewicht des Pigments, aufgebracht werden können, sind insbesondere die Oxide von Elementen der II., IV., V. und/oder VI. Haupt-und/oder Nebengruppe des Periodensystems geeignet. Insbesondere sind dies Oxide des Zink, Zirkon, Titan, Chrom, Silicium, Zinn und Wismut.

Diese Oxide können sich als diskrete Schicht auf der Oberfläche des Aluminiumeisenoxids befinden und werden in jedem Fall zunächst so erzeugt. Durch Glühen der so erhaltenen Pigmente bei höheren Temperaturen von etwa 400 bis etwa 800 °C können jedoch durch die dabei auftretenden Diffusionsvorgänge auch Mischphasen erhalten werden.

Die Auffällung der Oxide wird vorteilhafterweise in wässeriger Suspension vorgenommen. Dazu kann das Aluminiumeisenoxidpigment in einer Lösung eines geeigneten Metallsalzes suspendiert werden und das Metalloxid durch geeignete Maßnahmen, wie z. B. Zugabe einer Base oder thermische Hydrolyse, ausgefällt werden. Es kann aber auch das Metallsalz langsam zu einer Aufschlämmung des Ausgangspigments zudosiert werden, wobei durch gleichzeitige Zugabe einer Base ein zur Fällung geeigneter pH-Wert aufrecht erhalten wird. Solche Fällverfahren sind dem Fachmann bekannt und orientieren sich beispielsweise an den in den deutschen Patentschriften 14 67 468 und 20 09 566 beschriebenen Verfahren zur Auffällung von Titandioxid auf Glimmer schuppen. Die Auffällung von Metalloxiden kann alternativ jedoch auch aus der Gasphase erfolgen, z. B. durch thermische Zersetzung und Oxidation einer geeigneten Ausgangsverbindung in einer Wirbelschicht, wobei ggf. ein solches Verfahren kombiniert werden kann, mit der anschließenden Reduktion des Eisenoxidpigmentes.

Die Auffällung weiterer Oxide kann im Prinzip vor oder nach der Reduktion des Eisenoxids erfolgen. Soll jedoch das aufgebrachte Oxid eingeglüht werden, so empfiehlt es sich, die Reduktion danach oder gleichzeitig mit diesem Prozess durchzuführen, da andernfalls beim Glühen eine Reoxidation erfolgen kann.

Die erfindungsgemäßen Pigmente können wegen ihres attraktiven Farbglanzes als Pigmente im dekorativen Bereich zur Einfärbung von Lacken, Farben, Kunststoffen, Fasern, Glas, Keramik, Kosmetika oder im Druckbereich Anwendung finden. Wegen ihrer magnetischen Eigenschaften und elektrischen Leitfähigkeit sind sie jedoch auch für Einsatzzwecke, wo es auf solche Effekte ankommt, geeignet. Durch die Erfindung stehen daher sehr vorteilhafte und im breiten Rahmen anwendbare Pigmente zur Verfügung.

Beispiel 1

50 g eines nach Beispiel 2 des US-Patents 4,373,963 hergestellten Pigments werden bei 500 °C in einem mit 100 l/Std. strömenden Gasgemisch aus 60 Teilen Stickstoff und 40 Teilen Wasserstoff 30 Minuten reduziert. Man erhält ein - schwarzes, glänzendes, magnetisches Pigment mit den charakteristischen Magnetitlinien im Debye-Scherrer-Spektrum.

Beispiel 2

50 g eines nach Beispiel 2 der EP-PS 68311 hergestellten rot-violetten Pigments werden bei 300 °C in einem mit 100 l/Std. strömenden Gasgemisch aus 60 Teilen Stickstoff und 40 Teilen Wasserstoff 30 Minuten reduziert. Man erhält ein schwarzgelbes, glänzendes, magnetisches Pigment, dessen Eisenoxidanteil aus 40 Teilen $Fe_2O_3$ (Hämatit) und 60 Teilen $Fe_3O_4$ (Magnetit) besteht.

Beispiel 3

Einer Suspension von 50 g eines nach Beispiel 2 der EP-PS 68311 hergestellten Pigments in 1500 ml Wasser werden bei 75 °C und einem pH-Wert von 2 langsam 170 ml einer 10 Gew.% igen Lösung von $TiCl_4$ in Wasser zugetropft, wobei der pH-Wert durch gleichzeitiges Zutropfen einer 10 %igen Natronlauge konstant gehalten wird. Danach rührt man noch 45 Minuten nach, filtriert ab, wäscht mit Wasser, trocknet bei 90 °C und glüht 30 Minuten bei 900 °C.

Das so erhaltene, glänzende, tief rot-violette Pigment wird entsprechend Beispiil 1 reduziert, wobei man ein glänzendes, schwarzes Pigment mit rot-violettem Schimmer erhält.

Beispiel 4

Einer Suspension von 50 g eines nach Beispiel 2 der EP-PS 68311 hergestellten Pigments in 1500 ml Wasser wird bei 75 °C und einem pH-Wert von 2 langsam eine Lösung von 66,67 g $KCr(SO_4)_2 \times 12\ H_2O$ in 400 ml Wasser zugetropft, wobei der pH-Wert durch gleichzeitige Zugabe einer 12,5 %igen Ammoniaklösung konstant gehalten wird. Nach fünfzehnminütigem Nachrühren tropft man eine Lösung von 10 g $Na_2HPO_4 \times 12\ H_2O$ in 100 ml Wasser zu, filtriert ab, wäscht mit Wasser, trocknet bei 120 °C und glüht 30 Minuten bei 800 °C. Das so erhaltene oliv-braun glänzende Pigment wird entsprechend Beispiel 1 reduziert, wobei man ein glänzendes, schwarzes Pigment mit grünem Schimmer erhält.

Beispiel 5

Einer Suspension von 50 g eines nach Beispiel 2 der EP-PS 68311 hergestellten Pigments in 1500 ml Wasser werden bei 75 °C und einem pH-Wert von 2 500 ml einer 10 Gew.% igen Lösung von $SnCl_4 \times 5\ H_2O$ zugetropft, wobei der pH-Wert durch gleichzeitige Zugabe einer 10 %igen Natronlauge konstant gehalten wird. Nach dreißigminütigem Nachrühren wird abfiltriert, mit Wasser gewaschen, bei 120 °C getrocknet und für 30 Minuten bei 800 °C geglüht. Das so erhaltene, dunkelrote, glänzende Pigment wird entsprechend Beispiel 1 reduziert, wobei man ein glänzendes, - schwarzes Pigment mit einem roten Schimmer erhält.

**Ansprüche**

1. Plättchenförmige Pigmente auf Basis von Eisenoxid, die Aluminiumoxid in fester Lösung enthalten, gekennzeichnet durch die Formel $Al_xFe_{2-x}O_{3-y}$, wobei x einen Wert von 0,02 bis 0,5 und y einen Wert von 0,3 bis 1,0 besitzt.

2. Pigmente nach Anspruch 1 dadurch gekennzeichnet, daß sie zusätzlich Oxide der II., IV., V. und/oder VI. Haupt-und/oder Nebengruppe des Periodensystems der Elemente enthalten.

3. Verfahren zur Herstellung von plättchenförmigen Pigmenten der Formel $Al_xFe_{2-x}O_{3-y}$, wobei x einen Wert von 0,02 bis 0,5 und y einen Wert von 0,3 bis 1,0 besitzt, dadurch gekennzeichnet, daß man ein Pigment der Formel $Al_xFe_{2-x}O_3$, wobei x einen Wert von 0,02 bis 0,5 besitzt, in einer reduzierenden Atmosphäre auf eine Temperatur von etwa 200-800 °C erhitzt.

4. Verfahren nach Anspruch 3 dadurch gekennzeichnet, daß die Pigmente vor oder nach dem Erhitzen mit einem Oxid der II., IV., V. und/oder VI. Haupt-und/oder Nebengruppe des Periodensystems der Elemente beschichtet werden.

5. Verwendung der Pigmente nach Anspruch 1 in Lacken, Farben, Kunststoffen, Fasern, Glas, Keramik oder Kosmetika.

Europäisches Patentamt

EUROPÄISCHER RECHERCHENBERICHT

Nummer der Anmeldung

EP 87 11 4976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 97, Nr. 12, 20. September 1982, Seite 152, Zusammenfassung Nr. 94822x, Columbus, Ohio, US; & JP-A-82 49 667 (TITAN KOGYO K.K.) 23-03-1982<br>--- | | C 09 C 1/40<br>C 09 C 1/24 |
| A | CHEMICAL ABSTRACTS, Band 91, Nr. 16, 15. Oktober 1979, Seite 74, Zusammenfassung Nr. 124949q, Columbus, Ohio, US; K. YOSHIHISA et al.: "Preparation of pigments of iron (III) exide-aluminium oxide system by coprecipitation method", & KINKI DAIGAKU KOGAKUBU KENKYU HOKOKU 1978, 12, 15-21<br>--- | | |
| A | DE-A-3 324 400 (BAYER AG)<br>--- | | |
| D,A | US-A-4 373 963 (TOSHIAKI UENISHI et al.)<br>----- | | |
| | | | RECHERCHIERTE SACHGEBIETE (Int. Cl.4)<br><br>C 09 C<br>C 01 G |

Der vorliegende Recherchenbericht wurde für alle Patentansprüche erstellt

| Recherchenort | Abschlußdatum der Recherche | Prüfer |
|---|---|---|
| DEN HAAG | 28-01-1988 | VAN BELLINGEN I.C.A. |